# FASCICULE DE BREVET EUROPEEN

(11) **EP 2 288 862 B1**
(45) Date de publication et mention de la délivrance du brevet: **09.11.2011**
(21) Numéro de dépôt: 09745932.5
(22) Date de dépôt: 15.04.2009
(51) Int. Cl.: F28F 1/10, F02K 1/82

(54) **DISPOSITIF DE REFROIDISSEMENT D'UNE PAROI**
WANDKÜHLVORRICHTUNG
WALL COOLING DEVICE

(30) Priorité: 17.04.2008 FR 0852609
(43) Date de publication de la demande: 02.03.2011
(73) Titulaire: Snecma, 75015 Paris (FR)
(72) Inventeur: Mons, Claude, F-77176 Savigny Le Temple (FR)
(74) Mandataire: Barbin le Bourhis, Joël
(86) Numéro de dépôt international: PCT/FR2009/050688
(87) Numéro de publication internationale: WO 2009/138613

(56) Documents cités:
- EP-A- 1 882 822
- DE-A1- 19 919 835
- FR-A- 2 873 167
- JP-A- 60 164 192

## Description

La présente invention a pour objet un turboréactor pour aéronef comprenant un dispositif de refroidissement conforme au préambule de la revendication 1. FR 2873 167 divulgue un tel réacteur.

Le problème du refroidissement d'une paroi se présente bien sûr dans de très nombreux domaines techniques. C'est notamment le cas dans les turboréacteurs pour aéronefs dans lesquels certaines parois peuvent être portées à des températures inacceptables et pour lesquelles il faut donc prévoir un système de refroidissement.

Plus particulièrement encore, l'invention concerne un dispositif de refroidissement de paroi qui ne produise un effet de refroidissement que de façon intermittente, c'est-à-dire lorsque la paroi atteint effectivement sa température critique.

Dans le cas des turboréacteurs pour aéronefs, le refroidissement de telles parois ou peaux est actuellement réalisé le plus souvent à l'aide de rangées de tuyaux ou de tubes perforés capables lorsqu'ils sont alimentés en fluide de refroidissement de refroidir la paroi.

Un inconvénient de ce système de refroidissement est qu'il nécessite la mise en place de structures particulières et d'un système d'alimentation en fluide de refroidissement de cette structure.

Un premier objet de la présente invention est de fournir un turboréacteur pour aérenef muni d'un dispositif de refroidissement d'une paroi qui soit d'une structure plus simple et qui automatiquement ne produit l'effet de refroidissement que lorsque la paroi à refroidir atteint la température à laquelle on veut la maintenir.

Pour atteindre ce but selon l'invention, le dispositif de refroidissement d'une paroi ayant une première face soumise à une source d"échauffement et une deuxième face le long de laquelle circule un fluide externe à une température inférieure à T, pour maintenir ladite paroi à une température sensiblement égale à la température T, se **caractérise en ce qu'**il comprend au moins une pièce de refroidissement comportant une partie de fixation et une partie de refroidissement, ladite pièce étant réalisée en un alliage à mémoire de forme thermo-conducteur ayant une température de transition T, ladite partie de fixation comportant des moyens de fixation rigide sur la deuxième face de ladite paroi, ladite partie de refroidissement étant conformée pour prendre par elle-même une première position sensiblement parallèle à ladite paroi lorsque la température de la paroi est inférieure à ladite température T et, si la température de la paroi est au moins égale à T, à prendre par elle-même une deuxième position dans laquelle le plan moyen de ladite deuxième partie fait avec un plan tangent à ladite paroi un dièdre compris entre 45 et 90 degrés.

Grâce à l'utilisation de pièces de refroidissement réalisées en un alliage à mémoire de forme thermo-conducteur, l'effet de refroidissement ne se produit que lorsque la température de la paroi à refroidir atteint effectivement la température de transition de l'alliage à mémoire de forme thermo-conducteur du fait de la conduction thermique entre la paroi et la pièce de refroidissement. Lorsque la température n'est pas atteinte, la partie de refroidissement de la pièce de refroidissement est plaquée contre la paroi et elle ne produit donc aucun effet de refroidissement particulier. En revanche lorsque cette température est atteinte, la pièce de refroidissement passe dans son deuxième état et la partie de refroidissement prend une angulation comprise entre 45 et 90 degrés par rapport à la paroi à refroidir.

On sait que différents alliages à mémoire de forme existent correspondant à des températures de transition différentes. On sait également qu'il est possible, dans une phase préliminaire d'entraînement ou de préformation de soumettre la pièce en matériau à mémoire de forme à un conditionnement qui lui permet, lorsque sa température de transition est atteinte, de prendre une forme modifiée entièrement définie à l'avance après que cette pièce ait été forcée un certain nombre de fois. On sait également que le changement de forme de cette pièce peut être réalisé un très grand nombre de fois, par exemple cinquante mille fois.

En outre, on sait que le plus souvent la température à laquelle la pièce en alliage à mémoire de forme reprend sa forme initiale est décalée d'une vingtaine de degrés par rapport à sa température de transition. Ainsi, on évite un phénomène de battement dans la régulation de la température de la paroi.

Selon un premier mode de mise en oeuvre, le plan moyen de la partie de refroidissement est sensiblement parallèle à la direction d'écoulement du fluide externe.

Dans ce cas, lorsque la partie de refroidissement est dans sa deuxième position, cette partie joue le rôle d'ailette de refroidissement qui augmente la surface d'échange entre la paroi et le fluide externe.

Selon un deuxième mode de mise en oeuvre, le plan moyen de la partie de refroidissement de la pièce de refroidissement est sensiblement orthogonal à la direction d'écoulement du fluide externe.

On comprend que dans ce deuxième cas les parties de refroidissement en position active, provoquent des turbulences dans le flux externe à proximité immédiate de la paroi à refroidir augmentant ainsi le coefficient de Reynolds de cet écoulement et améliorant ainsi l'effet de refroidissement.

De préférence encore et quel que soit le mode de mise en oeuvre envisagé, le dispositif de refroidissement comprend une pluralité de pièces de refroidissement sensiblement alignées selon au moins une droite perpendiculaire à la direction d'écoulement du flux externe.

Selon un autre mode de mise en oeuvre, la paroi à refroidir est sensiblement de révolution et le dispositif de refroidissement comprend une pluralité de pièces de refroidissement sensiblement disposées selon au moins un cercle de la surface de révolution.

Selon encore un autre mode de réalisation, les pièces de refroidissement ont des températures de transition différentes.

Grâce à cette disposition, il est possible d'adapter l'effet de refroidissement produit par le dispositif en fonction d'un gradient de température qui peut exister à raison de la nature de la source d'échauffement disposée en regard de la première face de la paroi à refroidir.

D'autres caractéristiques et avantages de l'invention apparaîtront mieux à la lecture de la description qui suit de plusieurs modes de réalisation de l'invention donnés à titre d'exemples non limitatifs. La description se réfère aux figures annexées, sur lesquelles :
- les figures 1A, 1B et 1C illustrent le principe de l'invention, la figure 1A représentant en perspective la pièce de refroidissement au repos, la figure 1B représentant la pièce de refroidissement en position active et la figure 1C étant une coupe selon la ligne C-C de la figure 1A ;
- la figure 2 est une vue en coupe longitudinale d'un turboréacteur pour aéronef auquel peut être appliqué le dispositif de refroidissement ;
- la figure 3 est une vue en coupe verticale d'une paroi équipée d'un dispositif de refroidissement selon un premier mode de mise en oeuvre ;
- la figure 4 est une vue en coupe verticale d'un deuxième mode de mise en oeuvre du dispositif de refroidissement ;
- la figure 5 est une vue en coupe verticale d'un troisième mode de mise en oeuvre du dispositif de refroidissement ;
- la figure 6A est une vue d'un dispositif de refroidissement selon l'invention comportant une pluralité de pièces de refroidissement en position de repos ;
- la figure 6B est analogue à la figure 6A mais les pièces de refroidissement sont en position active ;
- la figure 7 est une vue en perspective d'une variante de réalisation du dispositif de refroidissement selon les figures 6A et 6B ;
- la figure 8 est une vue en perspective d'une paroi de révolution équipée d'un dispositif de refroidissement selon l'invention ;
- la figure 9 est une vue en perspective d'un mode de réalisation d'une pièce de refroidissement utilisable dans le cas de la figure 8 ;
- la figue 10 montre une variante de réalisation du dispositif de refroidissement de la figure 8 ; et
- la figure 11 est une vue en perspective d'une autre variante de réalisation de la pièce de refroidissement en position active.

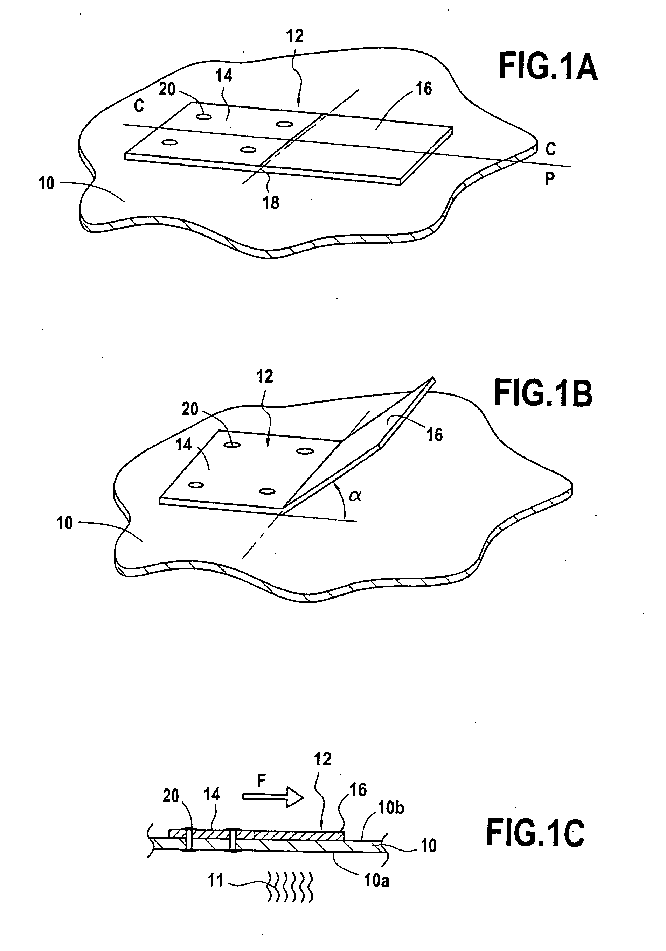

En se référant tout d'abord aux figures 1A, 1B et 1C, on va décrire le principe de l'invention à partir d'une pièce de refroidissement. Sur ces figures, on a représenté une paroi 10 présentant une face interne 10a tournée vers une source d'échauffement 11 et une face externe 10b le long de laquelle circule un fluide de refroidissement symbolisé par la flèche F. Le problème à résoudre est de maintenir la paroi 10 à une température sensiblement égale à T, étant entendu que le flux de fluide F est lui-même à une température inférieure à T. La pièce de refroidissement élémentaire 12 est constituée par une première partie de fixation 14 et une deuxième partie de refroidissement 16. Ces deux parties sont reliées par une zone de pliage 18.

L'intégralité de la pièce de refroidissement 12 est réalisée avec un matériau à mémoire de forme dont la température de transition est adaptée à la température à laquelle on souhaite maintenir la paroi 10. Les alliages à mémoire de forme sont bien connus et il n'est donc pas nécessaire de les décrire ici plus en détail. Des alliages à mémoire de forme tels que cuivre-aluminium-béryllium ou encore cuivre-aluminium-nickel sont bien connus. Pour des alliages à mémoire de forme ayant une température de transition plus élevée, on peut citer l'alliage rhénium-palladium dont la température de transition est voisine de 1050°C.

Comme cela est connu, dans une phase initiale, la pièce 12 en alliage à mémoire de forme est préformée ou "éduquée" de telle manière qu'à sa température de transition, elle prenne spontanément la forme représentée sur la figure 1B. En d'autres termes, la partie de refroidissement 16 de la pièce de refroidissement 12 dans cette position active fait un angle alpha avec le plan de la paroi 10. Cet angle est de préférence compris entre 45 et 90 degrés. La partie de fixation 14 peut être rendue solidaire de la paroi 10 par tout moyen convenable tel que par rivetage 20 ou encore par soudure.

Le fonctionnement de cette pièce de refroidissement est simple. Lorsque la température de la paroi 10 est inférieure à la température désirée T, la partie de refroidissement 16 est dans l'alignement de la partie de fixation 14 c'est-à-dire sensiblement appliquée contre la paroi 10. La pièce de refroidissement est donc inactive. En revanche lorsque la température de la paroi 10 s'élève, par conduction thermique, la température de la pièce de refroidissement 12 s'élève de la même manière et lorsqu'elle atteint la température de transition T, elle prend la forme représentée sur la figure 1B rendant la partie de refroidissement 16 active puisque celle-ci fait alors l'angle α avec la paroi 10. L'angle α est de préférence compris entre 45 à 90 degrés.

Il va de soi que, lorsque la paroi 10 retrouve une température inférieure à T, la pièce de refroidissement et plus particulièrement sa partie de refroidissement 16 va revenir à sa position initiale.

Plus précisément, il faut indiquer que, entre la température de transition T et la température à laquelle la pièce en alliage à mémoire de forme reprend sa forme initiale, il existe une plage de températures qui le plus souvent est de l'ordre de 20 degrés. Cette différence de température permet d'avoir un fonctionnement stable du système et d'éviter des phénomènes de battement.

Il est important de souligner que la pièce de refroidissement ne nécessite aucun système mécanique additionnel pour passer de son état inactif à son état actif.

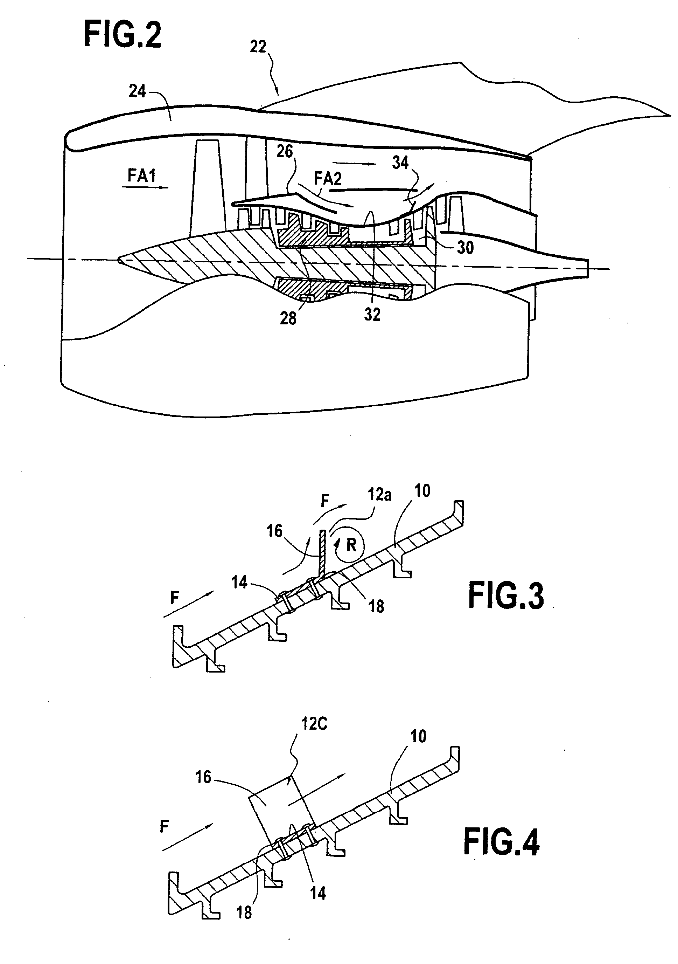

Sur la figure 2, on a représenté de façon simplifiée un turbomoteur pour aéronefs de forme standard. On a représenté sa virole externe 24 et la paroi externe 26 de l'ensemble de compression constitué par le compresseur basse pression 28 et le compresseur haute pression 30. Une partie du flux d'air FA1 pénétrant entre la paroi 26 et la virole externe 24 est dérivée dans l'ensemble compresseur. Une partie également de ce flux d'air FA1 référencée FA2 est dérivée pour venir au contact de la peau 32 de l'ensemble compresseur. Ce flux FA2 sert notamment à refroidir cette paroi 32. Sur cette figure, on a schématiquement représenté la mise en place d'une pièce de refroidissement 34 qui sera décrite plus en détail ultérieurement il suffit à présent d'indiquer que cette pièce de refroidissement 34 reste en position de repos tant que la paroi 32 est à une température inférieure ou égale à la température de transition T de l'alliage à mémoire de forme ayant servi à réaliser la pièce de refroidissement et qu'elle prend sa position active lorsque la paroi 32 atteint cette température.

Sur les figures 3, 4 et 5, on a représenté différents types possibles de montage d'une pièce de refroidissement 12.

Dans le mode de mise en oeuvre de la figure 3, la pièce de refroidissement 12a est fixée sur la paroi 10 de telle manière que, lorsque sa partie de refroidissement 16 est en position active, cette partie ne soit pas parallèle au flux de fluide F. Plus précisément de préférence, la zone de pliage 18 de la pièce de refroidissement est orthogonale à la direction du flux de fluide F. Dans ce cas, la pièce de refroidissement 12a est initialement montée de telle manière que la partie 16 en position relevée fasse un angle inférieur à 90 degrés avec la paroi, de préférence compris entre 45 et 75 degrés et un angle supérieur à 90 degrés avec la direction F du flux de fluide de refroidissement.

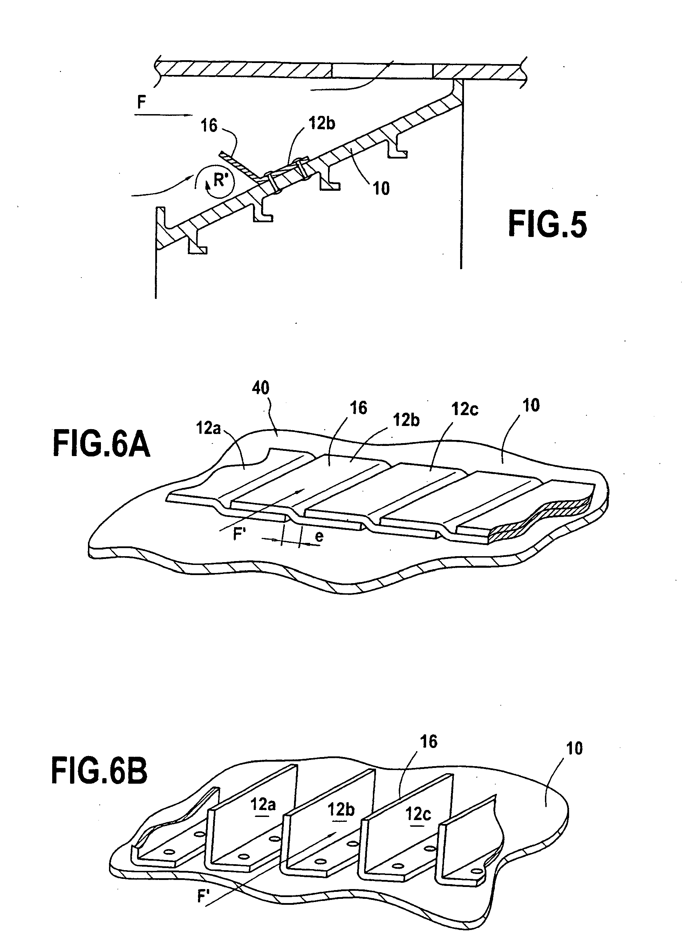

Dans le cas de la figure 5, le montage est inversé et la partie de refroidissement 16 de la pièce de refroidissement 12b fait avec la direction du flux de fluide de refroidissement un angle inférieur à 90 degrés.

Dans le cas de la figure 3 comme dans le cas de la figure 5, lorsque les parties de refroidissement 16 des pièces de refroidissement 12a et 12b sont en position active, ces parties de refroidissement créent des remous R ou R' en amont ou en aval de la pièce de refroidissement. Ces perturbations dans l'écoulement du fluide de refroidissement à proximité de la paroi 10 modifient dans cette zone le coefficient de Reynolds et comme cela est bien connu permet d'améliorer le refroidissement de la paroi 10.

Dans le mode de mise en oeuvre représenté sur la figure 4, la zone de pliage 18 de la pièce de refroidissement 12c est parallèle à la direction d'écoulement du flux de fluide de refroidissement F et de préférence la partie de refroidissement 16 de la pièce de refroidissement 12c en position active est orthogonale à la paroi 10. Lorsque la partie de refroidissement 16 est en position active, c'est-à-dire écartée de la paroi 10, la partie de refroidissement 16 constitue l'équivalent d'une ailette de refroidissement thermiquement reliée à la paroi 10. Cet ailette de refroidissement permet donc d'augmenter la surface d'échange entre le fluide de refroidissement et la paroi 10 améliorant ainsi le refroidissement de celle-ci. Plus précisément, si l'on considère la portion de surface de la paroi 10 recouverte par la partie de refroidissement 16 lorsqu'elle est au repos, cette même surface va être multipliée par trois lorsque la partie 16 arrive dans sa position active puisque ces deux faces participent à l'échange thermique.

Il va de soi qu'une seule pièce de refroidissement est le plus souvent insuffisante pour produire l'effet de refroidissement recherché et par ailleurs les parois à refroidir sont souvent de révolution et il est donc souhaitable que le système de refroidissement présente également une symétrie de révolution. Dans le cas des figures 6A et 6B, le dispositif de refroidissement 40 est constitué par une pluralité de pièces de refroidissement 12a, 12b, 12c, etc. Les parties de fixation 14 de ces pièces de refroidissement sont fixées bien sûr directement sur la paroi 10 à refroidir en prévoyant un intervalle e entre les parties de fixation successives. Comme le montrent les figures, les parties de refroidissement 16 recouvrent en grande partie les parties de fixation 14 des pièces de refroidissement adjacentes. Plus précisément, au repos, la zone de pliage 18 de chaque pièce de refroidissement est courbée de telle manière que les parties de fixation 14 et les parties de refroidissement 16 soient parallèles entre elles mais décalées d'une distance sensiblement égale à l'épaisseur des parties de fixation. On obtient ainsi une densité importante linéaire des pièces de refroidissement. Dans ce mode de réalisation, les zones de pliage 18 des pièces de refroidissement 12a, 12b, etc. sont parallèles à la direction F du flux du fluide de refroidissement. Il va de soi que dans le formage initiale des pièces de refroidissement, celles-ci sont conformées de telle manière qu'elles présentent au repos, c'est-à-dire en-dessous de leur température de transition T la forme représentée sur la figure 6A. Comme cela était décrit antérieurement et comme le montre mieux la figure 6B en position active, les parties de refroidissement 16 des pièces de refroidissement 12a, 12b, 12c, etc. sont orthogonales à la paroi 10 et parallèles entre elles. Les différentes parties de refroidissement 16 définissant des canaux parallèles 42 d'écoulement du fluide de refroidissement.

Comme on l'a déjà expliqué avec cette disposition, la surface d'échange entre la paroi 10 et le flux de fluide de refroidissement est multipliée par trois lorsque les parties de refroidissement 16 sont en position active telles que représentées sur la figure 6B.

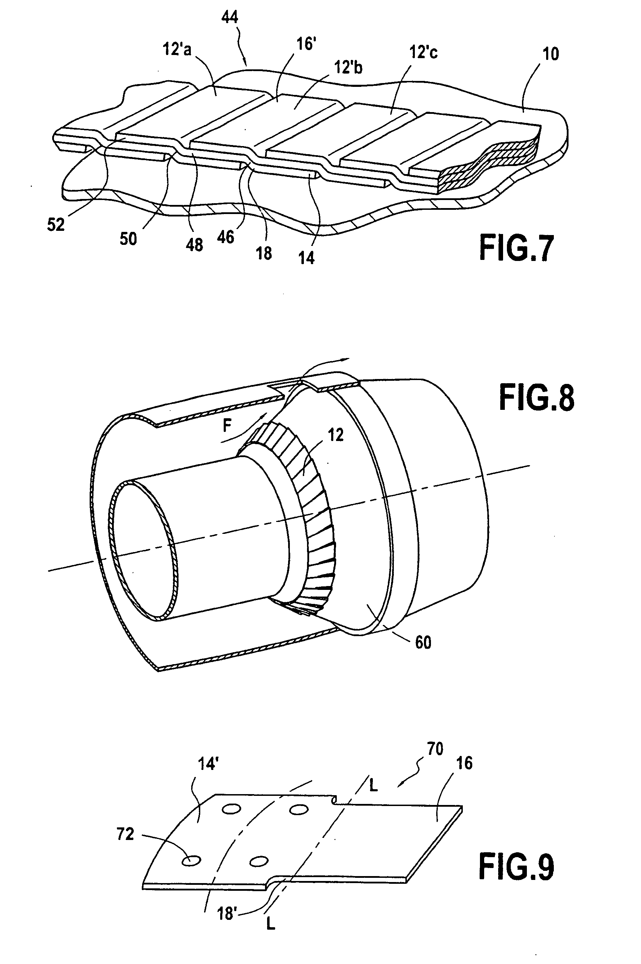

Sur la figure 7, on a représenté une autre variante de réalisation du dispositif de refroidissement qui porte la référence générale 44. D'une manière générale, ce système est constitué par "trois couches" d'éléments de pièces de refroidissement. Chaque pièce 12'a, 12'b, etc. comporte une partie de fixation 14 qui est identique aux parties de fixation déjà décrites et une partie de refroidissement 16'. Cette partie de refroidissement 16' est raccordée à la partie de fixation 14 par une zone de pliage 18. La partie de refroidissement 16' comporte un premier redan 46, une première portion de refroidissement 48, un deuxième redan 50 et une deuxième portion de refroidissement 52. Ces deux redans 46 et 50 permettent à la partie de refroidissement 16' de se superposer d'une part à la partie de fixation d'une pièce de refroidissement décalée de deux rangs et à la première portion de refroidissement de la partie de refroidissement de la pièce de refroidissement décalée d'un cran.

Chaque pièce de refroidissement 12'a, 12'b, etc. est "éduquée" initialement pour que la partie de refroidissement 16' vienne à angle droit de la partie de fixation 14 par pivotement autour de la zone de pliage 18. Selon les modes de réalisation, on peut prévoir que dans son état final, le deuxième redan 50 disparaisse de telle manière que la partie de refroidissement 16' soit plane ou on peut également prévoir que le redan demeure.

On comprend que dans ce mode de réalisation, on obtient une densité de pièce de refroidissement plus élevée par unité de surface de la paroi 10 à refroidir. Plus précisément, si l'on appelle S la surface de la partie de fixation 14, on comprend que la surface d'échange thermique vaudra quatre fois S.

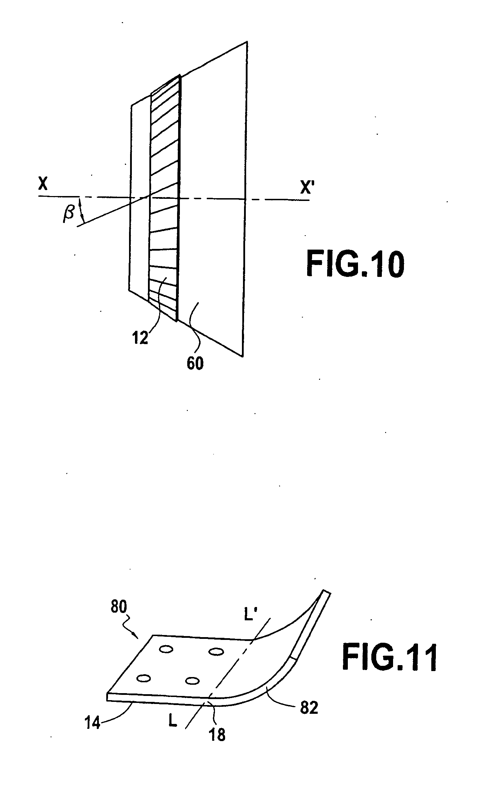

Les figures 8 et 10 illustrent des pièces de refroidissement 12 fixées sur une paroi 60 qui est une virole cylindrique ou plus précisément tronconique. Dans le cas de la figure 8, en position active, les parties de refroidissement sont parallèles au flux F du fluide de refroidissement. Dans le cas de la figure 10, ces mêmes pièces de refroidissement 12 ont des zones de pliage qui font un angle β avec l'axe X-X' de la surface tronconique à refroidir 60.

Dans les modes d'utilisation représentés sur les figures 8 et 10, les zones de pliage 18 des pièces de refroidissement sont parallèles entre elles et fonctionnent donc comme des ailettes de refroidissement. Il va cependant de soi que les pièces de refroidissement pourraient être fixées de telle manière que leurs zones de pliage soient toutes disposées sur une même circonférence de la paroi à refroidir. Il peut également y avoir plusieurs "anneaux" de pièces de refroidissement décalés selon l'axe de révolution de la paroi.

La figure 9 montre un exemple de pièces de refroidissement 70 plus particulièrement adapté à une fixation sur une surface cylindrique ou tronconique. La partie de fixation 14' a la forme d'une portion de surface cylindrique et peut être fixée sur la surface cylindrique par des rivets 72 ou encore des boulons ou par soudure. La partie de refroidissement 16 est identique à celles qui ont été représentées sur les figures précédentes, la zone de pliage 18' est conformée de telle manière que la ligne de pliage L-L' soit effectivement rectiligne, cette zone de pliage 18' permettant le passage de la surface en forme de portion de surface cylindrique 14' à la partie de refroidissement 16 qui est plane.

Sur la figure 11, on a représenté encore une autre variante de réalisation 80 de pièces de refroidissement. Dans ce cas, la partie de fixation 14 est identique aux parties de fixation décrites précédemment et en position et l'ensemble de la pièce a été "éduquée" de telle manière qu'en position active, la partie de refroidissement 82 est la forme d'une portion de surface cylindrique dont les génératrices sont parallèles à la ligne de pliage L-L' définie par la zone de pliage 18.

## Revendications

1. Turboréacteur pour aéronef comprenant un dispositif de refroidissement de la face externe d'une paroi (10) de l'ensemble compresseur de celui-ci, ayant une première face soumise à une source d"échauffement et une deuxième face le long de laquelle circule un fluide externe à une température inférieure à T, pour maintenir ladite paroi à une température sensiblement égale à la température T, **caractérisé en ce que** le dispositif de refroidissement comprend au moins une pièce de refroidissement (12) comportant une partie de fixation (14) et une partie de refroidissement (16), ladite pièce étant réalisée en un alliage à mémoire de forme thermo-conducteur ayant une température de transition T, ladite partie de fixation comportant des moyens de fixation rigide sur la deuxième face (10b) de ladite paroi, ladite partie de refroidissement étant conformée pour prendre par elle-même une première position sensiblement parallèle à ladite paroi lorsque la température de la paroi est inférieure à ladite température T et, si la température de la paroi est au moins égale à T, à prendre par elle-même une deuxième position dans laquelle le plan moyen de ladite deuxième partie fait avec un plan tangent à ladite paroi un dièdre compris entre 45 et 90 degrés.

2. Turboréacteur selon la revendication 1, **caractérisé en ce que** le plan moyen de ladite partie de refroidissement (16) dans sa deuxième position est sensiblement parallèle à la direction (F) d'écoulement du fluide externe.

3. Turboréacteur selon la revendication 2, **caractérisé en ce que**, dans sa deuxième position, ladite partie de refroidissement (16) fait un angle sensiblement égal à 90° avec le plan tangent à ladite paroi (10).

4. Turboréacteur selon la revendication 1, **caractérisé en ce que** le plan moyen de ladite partie de refroidissement (16) dans sa deuxième position est sensiblement orthogonal à la direction (F) d'écoulement dudit fluide externe.

5. Turboréacteur selon la revendication 4, **caractérisé en ce que** ladite partie de refroidissement (16), dans sa deuxième position, fait un angle compris entre 45 et 75 degrés avec le demi-plan tangent en aval de ladite pièce selon la direction (F) d'écoulement dudit fluide externe.

6. Turboréacteur pour une paroi sensiblement plane, selon l'une quelconque des revendications 2 et 3, **caractérisé en ce qu'**il comprend une pluralité de pièces de refroidissement (12a, 12b, 12c) sensiblement alignées selon au moins une droite parallèle à la direction d'écoulement du flux externe.

7. Turboréacteur pour une paroi sensiblement de révolution (60), selon l'une quelconque des revendications 4 à 5, **caractérisé en ce qu'**il comprend une pluralité de pièces (12) sensiblement disposées selon au moins un cercle de ladite surface de révolution.

8. Turboréacteur pour une paroi sensiblement plane selon l'une quelconque des revendications 2 et 3, **caractérisé en ce qu'**il comprend une pluralité de pièces (12) disposées selon au moins une droite sensiblement orthogonale à la direction d'écoulement du fluide externe.

9. Turboréacteur pour une paroi sensiblement de révolution (60) selon l'une quelconque des revendications 2 et 3, **caractérisé en ce qu**'il comprend une pluralité de pièces (12) disposées dans des plans contenant l'axe de révolution de ladite paroi.

10. Turboréacteur selon l'une quelconque des revendications 4 et 5, **caractérisé en ce qu**'il comprend une pluralité de pièces (12) de refroidissement disposées sur au moins une même ligne.

11. Turboréacteur selon l'une quelconque des revendications 6 à 10, **caractérisé en ce que** lesdites pièces de refroidissement (12) ont des températures de transition T différentes.

12. Turboréacteur selon l'une quelconque des revendications 7 et 9, **caractérisé en ce que** la partie de fixation de chaque pièce de refroidissement a la forme d'une portion de surface cylindrique et **en ce que** la partie de refroidissement est sensiblement plane.

## Claims

1. An aircraft jet engine comprising a wall-cooling device for cooling the external face of a wall (10) of the compressor unit having a first face subjected to a heat source and a second face along which an outer fluid flows at a temperature that is lower than T in order to maintain said wall at a temperature that is substantially equal to the temperature T, **characterized in that** the wall-cooling device comprises at least one cooling part (12) including a fastening portion (14) and a cooling portion (16), said part being made of a thermally-conductive shape-memory alloy having a transition temperature T, said fastener portion including fastener means for fastening it rigidly on the second face (10b) of said wall, said cooling portion being shaped so that it takes up a first position that is substantially parallel to said wall when the temperature of the wall is lower than said temperature T and, if the temperature of the wall is at least equal to T, so that it takes up a second position in which the mean plane of said second portion defines, relative to a plane tangential to said wall, a dihedral angle lying in the range 45° to 90°.

2. Aircraft jet according to claim 1, **characterized in that** the mean plane of said cooling portion (16) in its second position is substantially parallel to the flow direction (F) of the outer fluid.

3. Aircraft jet according to claim 2, **characterized in that** in its second position, said cooling portion (16) forms an angle that is substantially equal to 90° relative to the plane tangential to said wall (10).

4. Aircraft jet according to claim 1, **characterized in that** the mean plane of said cooling portion (16) in its second position is substantially orthogonal to the flow direction (F) of the outer fluid.

5. Aircraft jet according to claim 4, **characterized in that** said cooling portion (16), in its second position, forms an angle lying in the range 45° to 75° with the half-plane at a tangent downstream from said part along the flow direction (F) of said outer fluid.

6. Aircraft jet for a substantially plane wall, according to claim 2 or claim 3, **characterized in that** it includes a plurality of cooling parts (12a, 12b, 12c) substantially in alignment along at least one straight line parallel to the flow direction of the outer stream.

7. Aircraft jet for a wall that is substantially a surface of revolution (60), according to claim 4 or claim 5, **characterized in that** it includes a plurality of parts (12) placed substantially along at least one circle of said surface of revolution.

8. Aircraft jet for a substantially plane wall, according to claim 2 or claim 3, **characterized in that** it includes a plurality of parts (12) placed along at least one straight line substantially orthogonal to the flow direction of the outer fluid.

9. Aircraft jet for a wall that is substantially a surface of revolution (60), according to claim 2 or claim 3, **characterized in that** it includes a plurality of parts (12) placed on planes containing the axis of revolution of said wall.

10. Aircraft jet, according to claim 4 or claim 5, **characterized in that** it includes a plurality of cooling parts (12) placed on at least a single line.

11. Aircraft jet according to any one of claims 6 to 10, **characterized in that** said cooling parts (12) have different transition temperatures T.

12. Aircraft jet according to any one of claims 7 and 9, **characterized in that** the fastener portion of each cooling part has the shape of a fraction of cylindrical surface and **in that** the cooling portion is substantially plane.

## Patentansprüche

1. Turbostrahltriebwerk für ein Flugzeug, umfassend eine Vorrichtung zur Kühlung der Außenseite einer Wand (10) seiner Verdichteranordnung, welche Wand eine erste Seite, die einer Heizquelle ausgesetzt ist, sowie eine zweite Seite aufweist, entlang derer ein Außenfluid mit einer unterhalb von T liegenden Temperatur zirkuliert, um die Wand auf einer Temperatur zu halten, die im wesentlichen gleich der Temperatur T ist, **dadurch gekennzeichnet, daß** die Kühlvorrichtung wenigstens ein Kühlteil (12) umfaßt, das einen Befestigungsteil (14) und einen Kühlteil (16) aufweist, wobei das Teil aus einer wärmeleitenden Formgedächtnislegierung mit einer Übergangstemperatur T gefertigt ist, wobei der Befestigungsteil Mittel zur starren Befestigung an der zweiten Seite (10b) der Wand umfaßt, wobei der Kühlteil gestaltet ist, um durch sich selbst eine zu der Wand im wesentlichen parallele erste Position einzunehmen, wenn die Temperatur der Wand unter der Temperatur T liegt, und, wenn die Temperatur der Wand wenigstens gleich T ist, durch sich selbst eine zweite Position einzunehmen, in der die Mittelebene des zweiten Teils mit einer zu der Wand tangentialen Ebene einen Flächenwinkel im Bereich zwischen 45 und 90 Grad bildet.

2. Turbostrahltriebwerk nach Anspruch 1, **dadurch gekennzeichnet, daß** die Mittelebene des Kühlteils (16) in seiner zweiten Position zu der Strömungsrichtung (F) des Außenfluids im wesentlichen parallel verläuft.

3. Turbostrahltriebwerk nach Anspruch 2, **dadurch gekennzeichnet, daß** der Kühlteil (16) in seiner zweiten Position einen Winkel von im wesentlichen gleich 90° mit der zu der Wand (10) tangentialen Ebene bildet.

4. Turbostrahltriebwerk nach Anspruch 1, **dadurch gekennzeichnet, daß** die Mittelebene des Kühlteils (16) in seiner zweiten Position zu der Strömungsrichtung (F) des Außenfluids im wesentlichen orthogonal ist.

5. Turbostrahltriebwerk nach Anspruch 4, **dadurch gekennzeichnet, daß** der Kühlteil (16) in seiner zweiten Position einen Winkel im Bereich zwischen 45 und 75 Grad mit der Tangentialhalbebene stromabwärts des Teils entlang der Strömungsrichtung (F) des Außenfluids bildet.

6. Turbostrahltriebwerk für eine im wesentlichen ebene Wand, nach einem der Ansprüche 2 und 3, **dadurch gekennzeichnet, daß** es eine Vielzahl von Kühlteilen (12a, 12b, 12c) umfaßt, die im wesentlichen entlang wenigstens einer zu der Strömungsrichtung des Außenstroms parallelen Geraden ausgerichtet sind.

7. Turbostrahltriebwerk für eine im wesentlichen Rotationswand (60), nach einem der Ansprüche 4 bis 5, **dadurch gekennzeichnet, daß** es eine Vielzahl von Teilen (12) umfaßt, die im wesentlichen entlang wenigstens einem Kreis der Rotationsfläche angeordnet sind.

8. Turbostrahltriebwerk für eine im wesentlichen ebene Wand, nach einem der Ansprüche 2 und 3, **dadurch gekennzeichnet, daß** es eine Vielzahl von Teilen (12) umfaßt, die entlang wenigstens einer zu der Strömungsrichtung des Außenfluids im wesentlichen orthogonalen Geraden angeordnet sind.

9. Turbostrahltriebwerk für eine im wesentlichen Rotationswand (60), nach einem der Ansprüche 2 und 3, **dadurch gekennzeichnet, daß** es eine Vielzahl von Teilen (12) umfaßt, die in die Rotationsachse der Wand enthaltenden Ebenen angeordnet sind.

10. Turbostrahltriebwerk nach einem der Ansprüche 4 und 5, **dadurch gekennzeichnet, daß** es eine Vielzahl von Kühlteilen (12) umfaßt, die in wenigstens einer gleichen Reihe angeordnet sind.

11. Turbostrahltriebwerk nach einem der Ansprüche 6 bis 10, **dadurch gekennzeichnet, daß** die Kühlteile (12) unterschiedliche Übergangstemperaturen T aufweisen.

12. Turbostrahltriebwerk nach einem der Ansprüche 7 und 9, **dadurch gekennzeichnet, daß** der Befestigungsteil eines jeden Kühlteils die Form eines Zylinderflächenabschnitts aufweist und daß der Kühlteil im wesentlichen eben ist.
